# EUROPEAN PATENT APPLICATION

(11) **EP 2 778 920 A1**
(43) Date of publication of application: **17.09.2014**
(21) Application number: 14159272.5
(22) Date of filing: 12.03.2014
(51) Int. Cl.: G06F 9/50, G06F 17/30

(54) **Selectively altering requests based on comparison of potential value of requests**

(30) Priority: 13.03.2013 US 201313800234
(71) Applicant: Wal-Mart Stores, Inc., Bentonville, AR 72716 (US)
(72) Inventor: Zheng, Yan, Bentonville, AR 72716 (US); Yu, Junying, Bentonville, AR 72716 (US); Gattani, Abhishek, Bentonville, AR 72716 (US)
(74) Representative: Brandon, Paul Laurence

(57) **Abstract**

The present invention is generally directed to methods, systems, and computer program products for selectively altering the processing of a request based on a potential value of the request. When an undesirably high number of requests are being received by a server system, the server system can identify requests that have a potential value greater than a potential value of one or more other requests. The server system can then alter the processing of the requests having the lower potential value thereby ensuring that requests with higher potential value are processed adequately.

## Description

### BACKGROUND

### 1. Field of the Invention

This invention relates generally to the field of processing requests to an information retrieval system, and, more particularly, to methods and systems for selectively altering the processing of a request based on a potential value of the request.

### 2. Related Art

Many information retrieval systems exist for providing users with online access to information. For example, a retailer may provide a website that includes a product search engine. Users can submit queries to the product search engine to identify products that match the criteria of the queries.

One problem that such information retrieval systems face is receiving requests at an excessive rate. For example, in the case of a product search engine, if search queries are being received at a rate that approaches or exceeds the engine's capacity, the engine may slow or crash. To prevent the system from slowing or crashing, many systems implement a process of randomly dropping search queries. In other words, these systems monitor the rate at which requests are received, and begin randomly slowing or dropping requests if the rate exceeds some threshold.

This approach effectively prevents the system from becoming overloaded. However, the random slowing or dropping of requests can make the system less desirable to use. For example, if a user's request to the service is dropped, the user may be encouraged to use a different service to obtain desired information.

### SUMMARY OF THE INVENTION

According to the present invention in a first aspect, there is provided a method, performed by a server computing system that provides an information retrieval system, for selectively altering the processing of a request based on a potential value of the request, the method comprising: receiving, from each of plurality of client computer systems, a request to access a service provided by an information retrieval system; for each of the plurality of requests, accessing content associated with the request to generate a potential value of the request; comparing the potential value of each of the plurality of requests to determine a first request having a potential value that is less than the potential value of at least some of the other requests; and based on the comparison, performing one or both of: slowing the processing of the first request, or dropping the first request.

Suitably, the service provided by the information retrieval system comprises a product search engine.

Suitably, the accessed content for at least one of the requests comprises a location from which the request is received.

Suitably, the accessed content for at least one of the requests comprises a likelihood of a purchase that is associated with the request.

Suitably, the likelihood of the purchase is based on a purchase history of a user that submitted the request.

Suitably, the likelihood of the purchase is based on a purchase history of one or more products associated with the request.

Suitably, the accessed content for at least one of the requests comprises a profitability of one or more products associated with the request.

Suitably, the accessed content for at least one of the requests comprises a size of an order associated with the request.

Suitably, the accessed content for at least one of the requests comprises a likelihood that the request in a user selecting an item displayed in a response to the request.

Suitably, the accessed content for at least one of the requests is at least partially contained within the request.

Suitably, the accessed content for at least one of the requests is at least partially contained external to the request.

Suitably, the accessed content contained external to the request comprises content associated with one or more products that match search criteria contained within the request.

Suitably, the potential value of a request is based on at least two of the following criteria generated from the accessed content: a location from which the request originated; a likelihood of purchase associated with the request; a probability that a user that made the request will click on an item contained in a response to the request;

A profitability of one or more products returned in response to the request; and a number of products identified in the request.

Suitably, the potential value of a request is based at least partially on the service to which the request is made, the method further comprising; comparing the potential value of each of the plurality of requests to the potential value of one or more requests to a second service provided by the information retrieval system.

According to the present invention in a second aspect, there is provided at a computer system, a method for selectively altering the processing of an information retrieval request, the method comprising: accessing a plurality of information retrieval requests, the plurality of information retrieval requests requesting access to information managed by an information retrieval system, the plurality of information retrieval requests originating from a plurality of client computer systems, the plurality of information retrieval requests including a first information retrieval request and one or more other information retrieval requests; for each information retrieval request included in the plurality of information retrieval requests: comparing the information retrieval request against one or more of semantic signals and empirical signals; and based on the comparisons, assigning one or more scores to the information retrieval request, the one or more scores representing the relative importance of the information retrieval request; determining that the relative importance of the first information retrieval request is less than the relative importance of the one or more other information retrieval requests; and altering the processing of the first information retrieval request so that the traffic load associated with the plurality of information retrieval requests is within the capacity of the information retrieval system, altering the processing of the first information retrieval request including one or more of: degrading the service quality of the first information retrieval request or dropping the first information retrieval request.

Suitably, prior to altering the processing of the first information retrieval request, determining that the information retrieval system is approaching capacity based on the traffic load associated with the plurality of information retrieval requests; and wherein altering the processing of the first information retrieval request comprises altering the processing of the first information retrieval request in response to determining that the information retrieval system is approaching capacity.

Suitably, the empirical signals comprise information contained within the request.

Suitably, the semantic signals comprise information contained within the request that is used to identify other information stored external to the request.

Suitably, the other information stored external to the request includes one or more of: a percentage of users that purchase at least one of the one or more products when the one or more products are displayed to the users; a profit that will be earned if at least one of the one or more products is purchased; or a percentage of users that click on one or more advertisements that are displayed in conjunction with the display of the one or more products.

According to the present invention in a third aspect, there is provided a server system that provides access to an information retrieval system, the server system comprising: one or more processors; and computer storage media storing computer executable instructions which, when executed by the one or more processors, implement a method for selectively altering the processing of a request based on a potential value of the request, the method comprising: receiving, from each of plurality of client computer systems, a request to access one of a plurality of services provided by the information retrieval system, the plurality of services including a product search engine service; for each of the plurality of requests, accessing content associated with the request to generate a potential value of the request, the accessed content including content contained within the request and content stored externally to the request; comparing the potential value of each of the plurality of requests to determine a first request having a potential value that is less than the potential value of at least some of the other requests; and based on the comparison, performing one or both of: slowing the processing of the first request, or dropping the first request.

### BRIEF DESCRIPTION OF THE DRAWINGS

The specific features, aspects and advantages of the present invention will become better understood with regard to the following description and accompanying drawings where:
Figure 1 illustrates an example block diagram of a computing device.
Figure 2 illustrates an example computer architecture that facilitates selectively altering the processing of a request based on a potential value of the request.
Figures 3A-3C illustrate the processing of requests for various services.
Figure 4 illustrates an example of how content associated with a request can be used to generate a potential value of the request.
Figure 5 illustrates an example of how one or more potential values of a request can be generated. and
Figure 6 illustrates a flow chart of an example method for selectively altering the processing of a request based on a potential value of the request.

### DETAILED DESCRIPTION

The present invention extends to methods, systems, and computer program products for selectively altering the processing of a request based on a potential value of the request.

In the following description of the present invention, reference is made to the accompanying drawings, which form a part hereof, and in which is shown by way of illustration specific embodiments in which the invention is may be practiced. It is understood that other embodiments may be utilized and structural changes may be made without departing from the scope of the present invention.

Embodiments of the present invention may comprise or utilize a special purpose or general-purpose computer including computer hardware, such as, for example, one or more processors and system memory, as discussed in greater detail below. Embodiments within the scope of the present invention also include physical and other computer-readable media for carrying or storing computer-executable instructions and/or data structures. Such computer-readable media can be any available media that can be accessed by a general purpose or special purpose computer system. Computer-readable media that store computer-executable instructions are computer storage media (devices). Computer-readable media that carry computer-executable instructions are transmission media. Thus, by way of example, and not limitation, embodiments of the invention can comprise at least two distinctly different kinds of computer-readable media: computer storage media (devices) and transmission media.

Computer storage media (devices) includes RAM, ROM, EEPROM, CD-ROM, solid state drives ("SSDs") (e.g., based on RAM), Flash memory, phase-change memory ("PCM"), other types of memory, other optical disk storage, magnetic disk storage or other magnetic storage devices, or any other medium which can be used to store desired program code means in the form of computer-executable instructions or data structures and which can be accessed by a general purpose or special purpose computer.

A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer, the computer properly views the connection as a transmission medium. Transmissions media can include a network and/or data links which can be used to carry desired program code means in the form of computer-executable instructions or data structures and which can be accessed by a general purpose or special purpose computer. Combinations of the above should also be included within the scope of computer-readable media.

Further, upon reaching various computer system components, program code means in the form of computer-executable instructions or data structures can be transferred automatically from transmission media to computer storage media (devices) (or vice versa). For example, computer-executable instructions or data structures received over a network or data link can be buffered in RAM within a network interface module (e.g., a "NIC"), and then eventually transferred to computer system RAM and/or to less volatile computer storage media (devices) at a computer system. RAM can also include solid state drives (SSDs or PCIx based real time memory tiered Storage, such as FusionIO). Thus, it should be understood that computer storage media (devices) can be included in computer system components that also (or even primarily) utilize transmission media.

Computer-executable instructions comprise, for example, instructions and data which, when executed at a processor, cause a general purpose computer, special purpose computer, or special purpose processing device to perform a certain function or group of functions. The computer executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that the invention may be practiced in network computing environments with many types of computer system configurations, including, personal computers, desktop computers, laptop computers, message processors, hand-held devices, multiprocessor systems, microprocessor-based or programmable consumer electronics, network PCs, minicomputers, mainframe computers, mobile telephones, PDAs, tablets, pagers, routers, switches, various storage devices, and the like. The invention may also be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

Embodiments of the invention can also be implemented in cloud computing environments. In this description and the following claims, "cloud computing" is defined as a model for enabling ubiquitous, convenient, on-demand network access to a shared pool of configurable computing resources (e.g., networks, servers, storage, applications, and services) that can be rapidly provisioned via virtualization and released with minimal management effort or service provider interaction, and then scaled accordingly. A cloud model can be composed of various characteristics (e.g., on-demand self-service, broad network access, resource pooling, rapid elasticity, measured service, etc.), service models (e.g., Software as a Service (SaaS), Platform as a Service (PaaS), Infrastructure as a Service (IaaS), and deployment models (e.g., private cloud, community cloud, public cloud, hybrid cloud, etc.). Databases and servers described with respect to the present invention can be included in a cloud model.

Further, where appropriate, functions described herein can be performed in one or more of: hardware, software, firmware, digital components, or analog components. For example, one or more application specific integrated circuits (ASICs) can be programmed to carry out one or more of the systems and procedures described herein. Certain terms are used throughout the following description and Claims to refer to particular system components. As one skilled in the art will appreciate, components may be referred to by different names. This document does not intend to distinguish between components that differ in name, but not function.

The present invention is generally directed to methods, systems, and computer program products for selectively altering the processing of a request based on a potential value of the request. When an undesirably high number of requests are being received by a server system providing an information retrieval system, the server system can identify requests that have a potential value greater than a potential value of one or more other requests. The server system can then alter the processing the requests having the lower potential value thereby ensuring that requests with higher potential value are processed adequately.

In one embodiment, the present invention is implemented as method for selectively altering the processing of a request based on a potential value of the request. A request is received from each of plurality of client computer systems. Each request requests access to a service provided by an information retrieval system. For each of the plurality of requests, content associated with the request is accessed to generate a potential value of the request. The potential value of each of the plurality of requests is compared to determine a first request having a potential value that is less than the potential value of at least some of the other requests. Based on the comparison, either the processing of the first request is slowed or the first request is dropped.

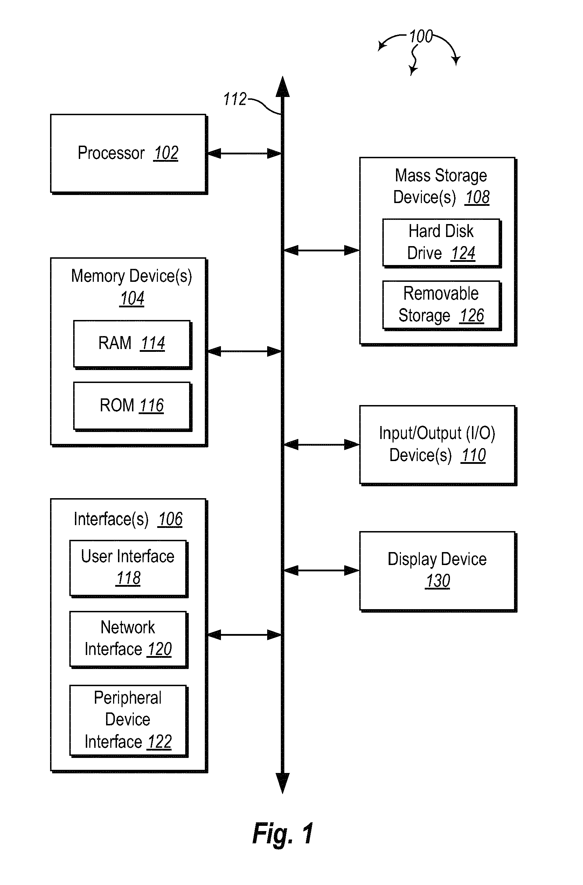

Figure 1 illustrates an example block diagram of a computing device 100. Computing device 100 can be used to perform various procedures, such as those discussed herein. Computing device 100 can function as a server, a client, or any other computing entity. Computing device 100 can perform various communication and data transfer functions as described herein and can execute one or more application programs, such as the application programs described herein. Computing device 100 can be any of a wide variety of computing devices, such as a mobile telephone or other mobile device, a desktop computer, a notebook computer, a server computer, a handheld computer, tablet computer and the like.

Computing device 100 includes one or more processor(s) 102, one or more memory device(s) 104, one or more interface(s) 106, one or more mass storage device(s) 108, one or more Input/Output (I/O) device(s) 110, and a display device 130 all of which are coupled to a bus 112. Processor(s) 102 include one or more processors or controllers that execute instructions stored in memory device(s) 104 and/or mass storage device(s) 108. Processor(s) 102 may also include various types of computer storage media, such as cache memory.

Memory device(s) 104 include various computer storage media, such as volatile memory (e.g., random access memory (RAM) 114) and/or nonvolatile memory (e.g., read-only memory (ROM) 116). Memory device(s) 104 may also include rewritable ROM, such as Flash memory.

Mass storage device(s) 108 include various computer storage media, such as magnetic tapes, magnetic disks, optical disks, solid state memory (e.g., Flash memory), and so forth. As depicted in Figure 1, a particular mass storage device is a hard disk drive 124. Various drives may also be included in mass storage device(s) 108 to enable reading from and/or writing to the various computer readable media. Mass storage device(s) 108 include removable media 126 and/or non-removable media.

I/O device(s) 110 include various devices that allow data and/or other information to be input to or retrieved from computing device 100. Example I/O device(s) 110 include cursor control devices, keyboards, keypads, barcode scanners, microphones, monitors or other display devices, speakers, printers, network interface cards, modems, cameras, lenses, CCDs or other image capture devices, and the like.

Display device 130 includes any type of device capable of displaying information to one or more users of computing device 100. Examples of display device 130 include a monitor, display terminal, video projection device, and the like.

Interface(s) 106 include various interfaces that allow computing device 100 to interact with other systems, devices, or computing environments as well as humans. Example interface(s) 106 can include any number of different network interfaces 120, such as interfaces to personal area networks (PANs), local area networks (LANs), wide area networks (WANs), wireless networks (e.g., near field communication (NFC), Bluetooth, Wi-Fi, etc, networks), and the Internet. Other interfaces include user interface 118 and peripheral device interface 122.

Bus 112 allows processor(s) 102, memory device(s) 104, interface(s) 106, mass storage device(s) 108, and I/O device(s) 110 to communicate with one another, as well as other devices or components coupled to bus 112. Bus 112 represents one or more of several types of bus structures, such as a system bus, PCI bus, IEEE 1394 bus, USB bus, and so forth.

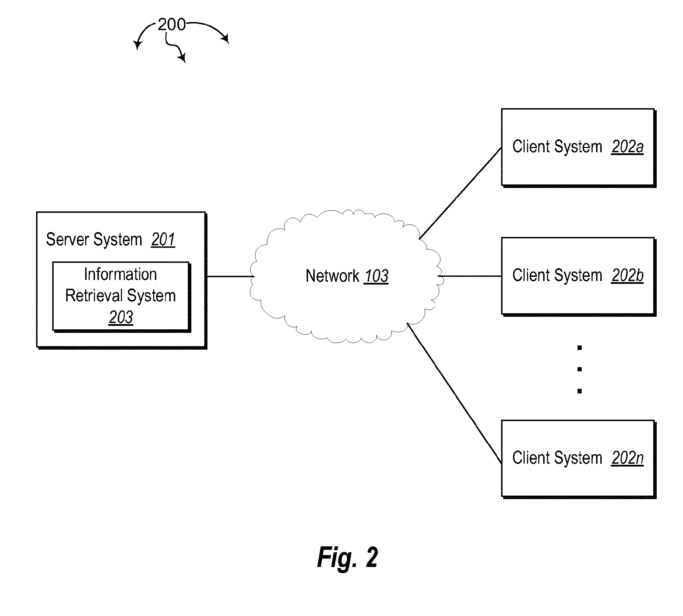

Figure 2 illustrates an example computer architecture 200 that facilitates selectively altering the processing of a request based on a potential value of the request. Referring to Figure 2, computer architecture 200 includes server system 201 and client systems 202a-202n. Server system 201 and client systems 202a-202n can comprise any type and number of computing components or devices. For example, server system 201 can represent a number of interconnected computing components forming a cloud. Also, client systems 202a-202n can represent a desktop computer, laptop computer, smart phone, etc.

Each of the depicted systems can be connected to one another over (or be part of) a network 103, such as, for example, a PAN, a LAN, a WAN, and even the Internet. Accordingly, each of the depicted devices and computer systems as well as any other connected computer systems and their components, can create message related data and exchange message related data (e.g., near field communication ("NFC") payloads, Bluetooth packets, Internet Protocol ("IP") datagrams and other higher layer protocols that utilize IP datagrams, such as, Transmission Control Protocol ("TCP"), Hypertext Transfer Protocol ("HTTP"), Simple Mail Transfer Protocol ("SMTP"), etc.) over the network.

Server system 201 provides an information retrieval system 203 that can be accessed by client systems 202a-202n. The information retrieval system can include one or more services. In some embodiments, information retrieval system 203 includes a product search engine service that processes requests to view information about products available for purchase.

Client systems 202a-202n send requests to server system 201 requesting access to the one or more services provided by information retrieval system 203. Generally, server system 201 can respond to these requests as they are received. However, if the rate at which the requests are received exceeds a threshold, server system 201 may no longer be capable of processing the requests in an appropriate manner. Accordingly, server system 201 can include functionality for selectively altering the processing of a request based on a potential value of the request.

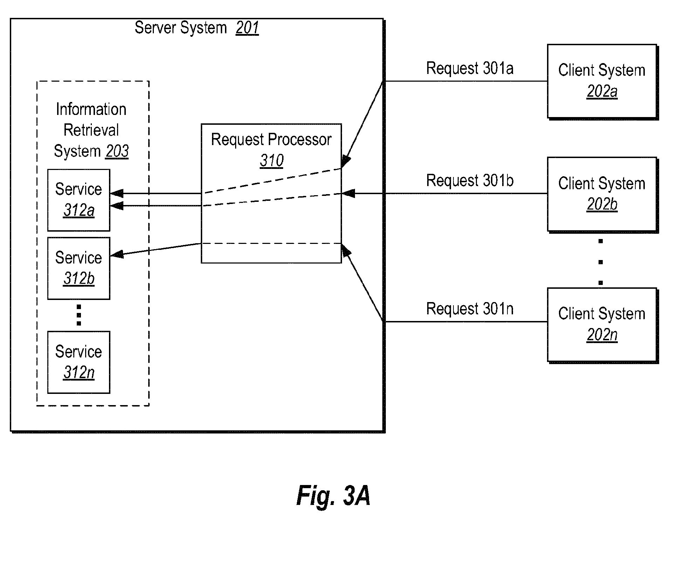

Figures 3A-3C illustrate examples of how server system 201 can selectively alter processing of a request. In Figures 3A-3C, server system 201 includes request processor 310 which receives and initially processes requests (e.g., requests 301a-301n) from client systems 202a-202n. Information retrieval system 203 also includes services 312a-312n to which the requests from client systems 202a-202n are directed.

Figure 3A represents the case when server system 201 is capable of processing the requests at the rate at which they are being received. Specifically, because server system 201 has sufficient available resources to process the current requests, request processor 310 routes each received request to the intended service.

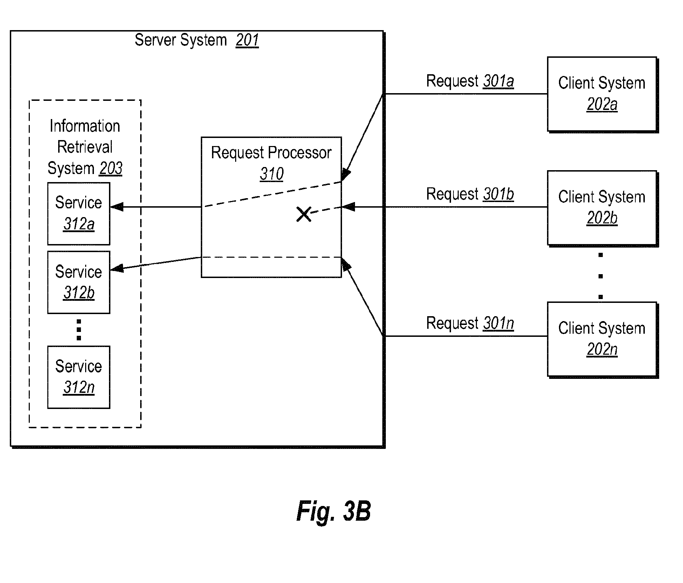

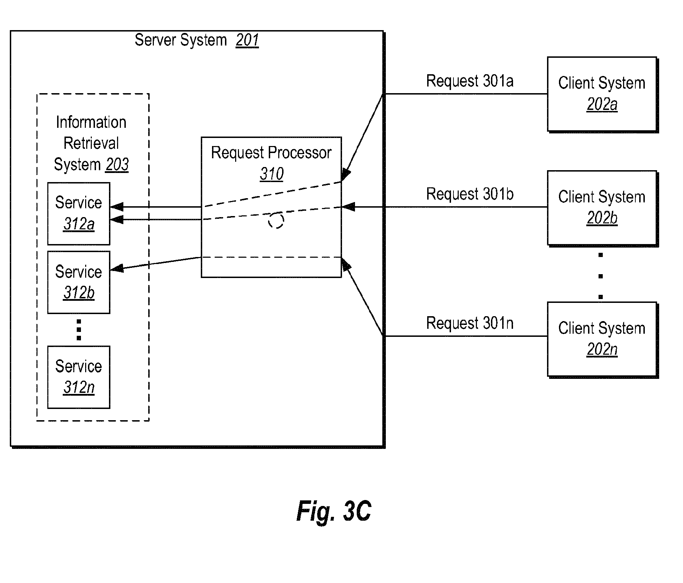

Figures 3B and 3C represent possible responses when server system 201 is receive requests and at an undesirably high rate. For example, server system 201 may reach this state when the amount of available resources for processing requests falls below some threshold, or when the time for processing requests exceeds some threshold. When server system 201 reaches this state, request processor 310 may begin to alter the processing of received requests. As shown in Figure 3B, this altering can include dropping a request (represented by request 301b terminating with an X within request processor 310). Alternately, as shown in Figure 3C, rather than dropping a request, request processor 310 may slow the processing of a request (represented by the loop in request 301 b), reduce the level of service or amount of content available to the request, or otherwise modify the processing of the request in a manner that limits the amount of resources required to process the request.

When it is determined that the amount of resources available for processing requests is below a threshold, request processor 310 can commence selectively altering the processing of some of the received requests. For example, because some requests may be more important or valuable than others, request processor 310 can employ a scheme for identifying and altering the processing of requests with a lower potential value, while allowing requests with a higher potential value to be processed as usual.

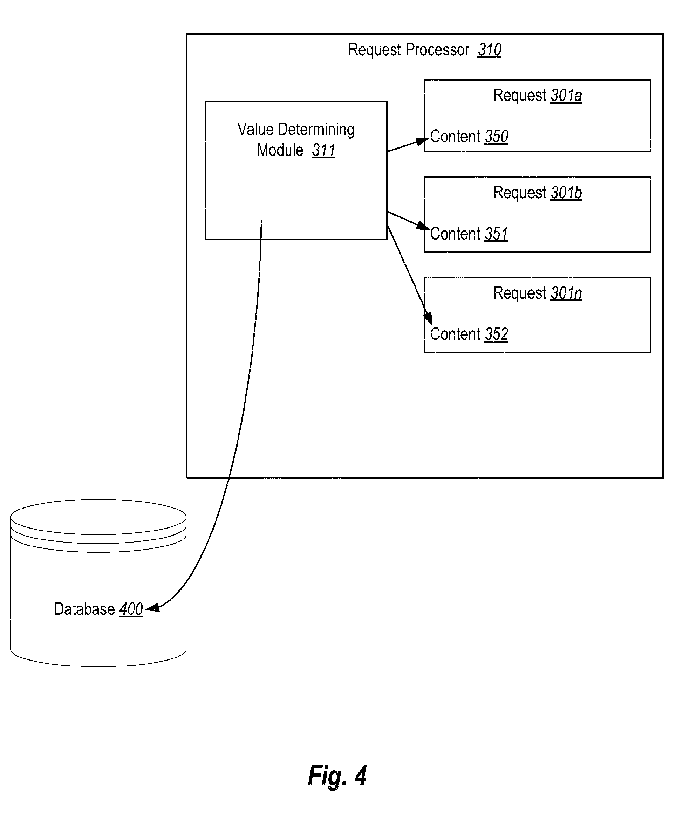

Figure 4 illustrates an example of how request processor 310 can determine a potential value of a request. As shown, each of requests 301a-301n includes content 350-352 respectively. This content can represent various different types of information that can be contained within or otherwise associated with a request (i.e., empirical and semantic information of the request). For example, the content can include information regarding a location from which the request originated, information about one or more products for which the information retrieval system provides information (e.g., a search query that identifies one or more products or types of products), information about a user that generated the request, etc.

Value determining module 311 can access content 350-352 to use the content in generating one or more potential values (or scores) of the associated request. Value determining module 311 can determine a relative value of some types of content (e.g., empirical content) directly from the content itself. With other types of content (e.g., semantic content), however, value determining module 311 can access a database 400 to identify the relative value of the content. The relative value of the various types of content in a request can be combined in some manner to generate the potential value of the request.

In some cases, value determining module 311 can generate multiple potential values for a single request. For example, each potential value may be generated using different criteria (e.g., different combinations of the content associated with the request). In such cases, a potential value can be generated for each set of different criteria. For example, the relative value assigned to a request based on the type of service to which the request is directed may be higher in some potential value calculations than in others.

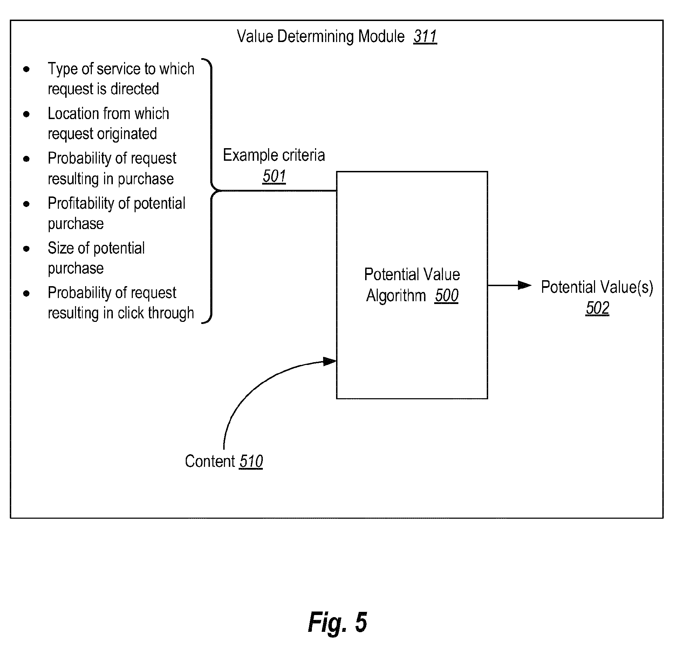

Figure 5 illustrates an example of value determining module 311. As shown, value determining module 311 can implement a potential value algorithm 500 that uses various types of criteria 501 to evaluate content 510 to generate one or more potential values 502 for a request. Content 510 can represent content contained within a request as well as content obtained from an external source (e.g., database 400).

Once value determining module 311 has determined a potential value of each request, request processor 310 can use these potential values to determine whether to alter the processing of any of the requests. For example, returning to Figure 3B, if request processor 310 concludes that the potential value of request 301b is less than the potential value of requests 301 a and 301 n, request processor 310 can alter the processing of request 301b (e.g., by dropping or slowing the processing of the request). By selectively altering the processing of requests at times of high request traffic, request processor 310 can ensure that the most valuable/important requests receive high responsiveness by altering the processing of other less valuable/important requests.

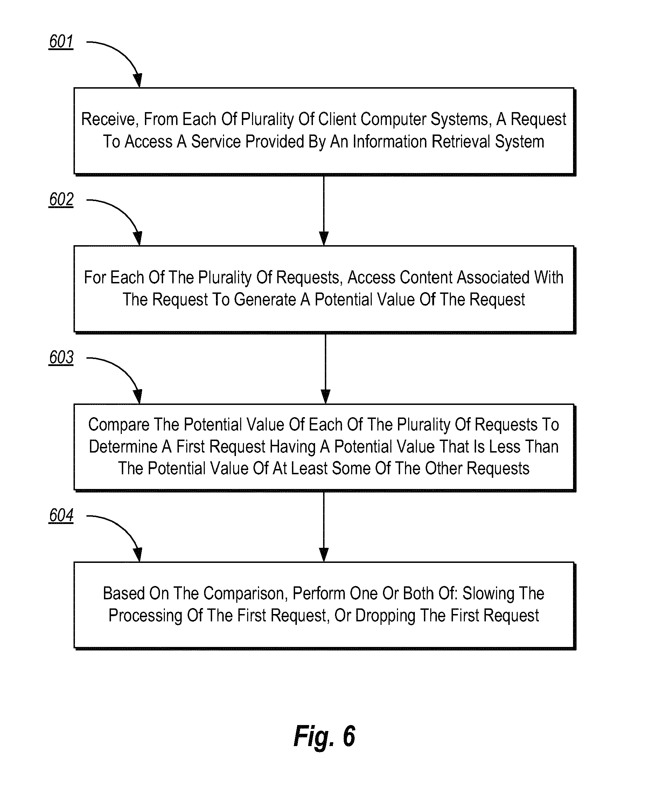

Figure 6 illustrates a flow chart of an example method 600 for selectively altering the processing of a request based on a potential value of the request. Method 600 will be described with respect to the components and data of computer architecture 200.

Method 600 includes receiving, from each of plurality of client computer systems, a request to access a service provided by an information retrieval system (601). For example, request processor 310 can receive requests 301a-301n from client systems 202a-202n. Each of requests 301a-301n can request access to one of services 312a-312n.

Method 600 includes for each of the plurality of requests, accessing content associated with the request to generate a potential value of the request (602). For example, value determining module 311 can access content contained within requests 301a-301n (e.g., content 350-352) and/or content associated with requests 301a-301n but stored external to requests 301a-301n (e.g., content in database 400). Potential value algorithm 500 can process accessed content according to various combinations of criteria (e.g., criteria 501) to generate one or more potential values 502 for each request 301a-301n.

Method 600 includes comparing the potential value of each of the plurality of requests to determine a first request having a potential value that is less than the potential value of at least some of the other requests (603). For example, request processor 310 can determine that a potential value assigned to request 301b is less than a potential value assigned to request 301a and 301 n.

Method 600 includes based on the comparison, performing one or both of: slowing the processing of the first request, or dropping the first request (604). For example, request processor 310 can cause request 301b to be dropped or cause the processing of request 301b to be slowed.

Although the components and modules illustrated herein are shown and described in a particular arrangement, the arrangement of components and modules may be altered to process data in a different manner. In other embodiments, one or more additional components or modules may be added to the described systems, and one or more components or modules may be removed from the described systems. Alternate embodiments may combine two or more of the described components or modules into a single component or module.

The foregoing description has been presented for the purposes of illustration and description. It is not intended to be exhaustive or to limit the invention to the precise form disclosed. Many modifications and variations are possible in light of the above teaching. Further, it should be noted that any or all of the aforementioned alternate embodiments may be used in any combination desired to form additional hybrid embodiments of the invention.

Further, although specific embodiments of the invention have been described and illustrated, the invention is not to be limited to the specific forms or arrangements of parts so described and illustrated. The scope of the invention is to be defined by the claims appended hereto, any future claims submitted here and in different applications, and their equivalents.

## Claims

1. A method, performed by a server computing system that provides an information retrieval system, for selectively altering the processing of a request based on a potential value of the request, the method comprising:
receiving, from each of plurality of client computer systems, a request to access a service provided by an information retrieval system;
for each of the plurality of requests, accessing content associated with the request to generate a potential value of the request;
comparing the potential value of each of the plurality of requests to determine a first request having a potential value that is less than the potential value of at least some of the other requests; and
based on the comparison, performing one or both of: slowing the processing of the first request, or dropping the first request.

2. The method of claim 1, wherein the service provided by the information retrieval system comprises a product search engine.

3. The method of claim 1, wherein the accessed content for at least one of the requests comprises a location from which the request is received.

4. The method of claim 1, wherein the accessed content for at least one of the requests comprises a likelihood of a purchase that is associated with the request.

5. The method of claim 4, wherein the likelihood of the purchase is based on a purchase history of a user that submitted the request.

6. The method of claim 4, wherein the likelihood of the purchase is based on a purchase history of one or more products associated with the request.

7. The method of claim 1, wherein the accessed content for at least one of the requests comprises a profitability of one or more products associated with the request.

8. The method of claim 1, wherein the accessed content for at least one of the requests comprises a size of an order associated with the request.

9. The method of claim 1, wherein the accessed content for at least one of the requests comprises a likelihood that the request will result in a user selecting an item displayed in a response to the request.

10. The method of claim 1, wherein the accessed content for at least one of the requests is at least partially contained within the request.

11. The method of claim 1, wherein the accessed content for at least one of the requests is at least partially contained external to the request.

12. The method of claim 11, wherein the accessed content contained external to the request comprises content associated with one or more products that match search criteria contained within the request.

13. The method of claim 1, wherein the potential value of a request is based on at least two of the following criteria generated from the accessed content:
a location from which the request originated;
a likelihood of purchase associated with the request;
a probability that a user that made the request will click on an item contained in a response to the request;
a profitability of one or more products returned in response to the request; and
a number of products identified in the request.

14. At a computer system, a method for selectively altering the processing of an information retrieval request, the method comprising:
accessing a plurality of information retrieval requests, the plurality of information retrieval requests requesting access to information managed by an information retrieval system, the plurality of information retrieval requests originating from a plurality of client computer systems, the plurality of information retrieval requests including a first information retrieval request and one or more other information retrieval requests;
for each information retrieval request included in the plurality of information retrieval requests:
comparing the information retrieval request against one or more of semantic signals and empirical signals; and
based on the comparisons, assigning one or more scores to the information retrieval request, the one or more scores representing the relative importance of the information retrieval request;
determining that the relative importance of the first information retrieval request is less than the relative importance of the one or more other information retrieval requests; and
altering the processing of the first information retrieval request so that the traffic load associated with the plurality of information retrieval requests is within the capacity of the information retrieval system, altering the processing of the first information retrieval request including one or more of: degrading the service quality of the first information retrieval request or dropping the first information retrieval request.

15. A server system that provides access to an information retrieval system, the server system comprising:
one or more processors; and
computer storage media storing computer executable instructions which, when executed by the one or more processors, implement a method for selectively altering the processing of a request based on a potential value of the request, the method comprising:
receiving, from each of plurality of client computer systems, a request to access one of a plurality of services provided by the information retrieval system, the plurality of services including a product search engine service;
for each of the plurality of requests, accessing content associated with the request to generate a potential value of the request, the accessed content including content contained within the request and content stored externally to the request;
comparing the potential value of each of the plurality of requests to determine a first request having a potential value that is less than the potential value of at least some of the other requests; and
based on the comparison, performing one or both of: slowing the processing of the first request, or dropping the first request.
